(19) Europäisches Patentamt
European Patent Office
Office européen des brevets

(11) EP 3 112 823 A1

(12) **EUROPEAN PATENT APPLICATION**

(43) Date of publication:
04.01.2017 Bulletin 2017/01

(51) Int Cl.:
G01F 25/00 (2006.01)        G01F 1/66 (2006.01)
G01F 15/06 (2006.01)

(21) Application number: 15175271.4

(22) Date of filing: 03.07.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: KAMSTRUP A/S
8660 Skanderborg (DK)

(72) Inventors:
• Sørensen, Jens Lykke
DK-8330 Beder (DK)
• Laursen, Peter Schmidt
DK-8660 Skanderborg (DK)
• Nielsen, Søren Tønnes
DK-8355 Solbjerg (DK)

(74) Representative: Plougmann Vingtoft a/s
Rued Langgaards Vej 8
2300 Copenhagen S (DK)

(54) **SYSTEM FOR MONITORING A UTILITY NETWORK**

(57)     A system for monitoring a utility network, e.g. to determine an error state such as a pipe leak etc. The system comprises a plurality of consumption meters at respective consumer sites (preferably more than 10% of the consumer sites). Besides determining a consumed quantity of the utility, these meters can measure a first parameter indicative of fluid flow rate, and at least one second parameter indicative of one of: pressure transients, noise level, and turbidity of the fluid. Via their communication modules, the meters can transmit all of: data representing the consumed quantity, the first and second parameters, and an indication of a location of its location in the utility network, e.g. a unique identification number.

These data from each of the plurality of consumption meters are received, preferably via an existing communication system for meter reading. A monitor algorithm is used to process the received first and second parameters according to a predetermined analysis algorithm, preferably involving a correlation analysis between flow rate and one or more of the second parameters. This algorithm produces an output which is compared with a reference value, e.g. such as based on a statistically based baseline value measured for the utility network or based on a general database value, and a state of the utility network is then determined and output accordingly.

FIG. 1

EP 3 112 823 A1

**Description**

FIELD OF THE INVENTION

The present invention relates to the field of utility networks, more specifically to systems for monitoring utility networks, e.g. for assisting a user in maintenance and with solving problems in a utility network, e.g. a water, heat, cooling, or gas network.

BACKGROUND OF THE INVENTION

Monitoring and maintenance of a utility network is complicated and involves substantial costs. Typically, different types of dedicated equipment is installed with the purpose of monitoring a state of the utility network, e.g. for detecting a state which is considered as an error state requiring urgent handling, such as a repair by service personnel in case of detection of a leak, or initiating a warning of consumers in case of a detected water contamination etc.

However, still many errors in a utility network can be difficult to detect and repair before causing a major damage, even by using dedicated permanently installed monitoring equipment or by using portable detection equipment. E.g. a minor leak can be difficult to detect before considerable damage has occurred, e.g. when a water leakage has damaged a part of a roadway or the like.

SUMMARY OF THE INVENTION

Following the above, it would be advantageous to provide a system and a method for effectively monitoring a state of a utility network. Especially, it is preferred that the system and method is sensitive with respect to detect an anomaly state (error state) in the utility network at an early stage to avoid major damages.

In a first aspect, the invention provides a system for monitoring a utility network, the system comprising:

- a plurality of consumption meters, such as ultrasonic consumption meters, arranged at respective consumer sites, such as at least 10% or more of all consumption sites in the utility network, and being arranged to determine a consumed quantity of the utility at the consumer site, such as a fluid volume and/or an amount of heat, wherein each of the plurality of consumption meters
- is arranged to measure a plurality of parameters comprising

  - a first parameter indicative of flow rate of a fluid flowing in the network at the consumer site,
  - at least one second parameter indicative of one of:

    • pressure transients of the fluid at the consumer site,
    • noise level of the fluid at the consumer site, and
    • turbidity of the fluid at the consumer site, and

- comprises a communication module arranged to transmit first data representing

  • the consumed quantity, and
    second data representing all of:
  • said plurality of parameters, and
  • an indication of a location of the consumption meter in the utility network, such as a unique identification of the consumption meter,

- a main collector arranged to receive all of said first and second data from each of said plurality of consumption meters, and
- a computer connected to the main collector, so as to receive and process said second data from each of said plurality of consumption meters according to a monitor algorithm, wherein the monitor algorithm is arranged

  - to process said second data from each of said plurality of consumption meters according to a predetermined analysis algorithm, such as involving a correlation analysis between the first parameter and one of the at least one second parameters,
  - to compare an output value from said analysis algorithm with a predetermined reference value, such as based on a statistically based baseline value measured for the utility network or based on a general database value, and
  - to generate an output indicative of a state of the utility network accordingly, such as an error state, e.g. generating a warning.

Such system for monitoring a utility network is advantageous since it allows monitoring the utility network with respect to different states, e.g. error states such as leaks etc. with a high sensitivity. Still, this can be obtained in a low cost way in an existing utility network without investing in expensive installation work and expensive extra equipment. This is based on the insight that the consumption meters installed at the consumer sites for charging purposes can be used as a platform for measuring and communicating valuable information to be used for utility monitoring. The only requirement is that consumption meters should be capable of measuring pressure transients, noise levels, and/or turbidity of fluid at the consumer site in addition to measuring a flow rate. Usually, a consumption meter, e.g. an ultrasonic consumption meter, can measure flow rate, and thus by integrating in the consumption meters the capability of measuring one or more of: pressure transients, noise levels, and turbidity, it is possible to utilize the already existing communication network. Thus, the pressure transients, noise levels, and turbidity data can be communicated along with the consumed quantity data to a central server, thereby utilizing the communication module in the consumption meter.

Such extra data, preferably from at least 10% of all consumer sites, allows correlation analysis of a large amount of flow rate and a secondary parameter over time to automatically generate, i.e. compute, a state of the utility network based on a comparison with a reference value in the form of a "normal" value for the utility network determined over a period of time (weeks or months), or based on reference data obtained from a similar network. This significantly improves sensitivity to detection of different types of states, e.g. error states in the utility network. E.g. such error state can include detection of a fluid leak, which can be done in a more sensitive way than with prior art methods, both with respect to detection of the leak at all, and with respect to localization of the leak.

The significant sensitivity improvement is preferably obtained, by collecting the second data from all of the plurality of consumption meters along with a time stamp, thus ensuring that flow rate data and data indicative of the second parameter are measured at the same time. Hereby, time series of the second data for each consumer site can be used to compute statistical parameters indicative of correlation between flow rate and the second parameter for each consumer site, which has proven useful for indication of states.

Still, this can be done without extensive and expensive installation of new equipment. Such monitoring improvement can be implemented by simply exchanging the existing consumption meters at the consumer sites with a consumption meter which has further measurement capabilities. This may be done when the consumption meters need to be repaired, or need to be replaced by other reasons, thereby saving dedicated installation work for improving the utility network monitoring.

In the following, preferred features and embodiments will be described.

The analysis algorithm may involve determining at least one output value in response to second data from at least one group of the plurality of consumption meters, and to compare said at least one output value with a predetermined reference value for the said group, and to determine a state for said group accordingly. Especially, said group is selected to correspond to consumer sites supplied by one common branch of the utility network. Especially, the analysis algorithm may involve determining at least one output value in response to a plurality of different groups of consumption meters selected to form a hierarchy of consumption meters corresponding to a hierarchy of the utility network piping configuration. Such forming of groups, e.g. in a hierarchical structure following the utility network pipe layout, allows efficient data processing, preferably by time tracking one or more statistical parameters representing cross correlation between flow rate and the second parameter (e.g. average, standard deviation, minimum values, maximum values), determined for each group.

In the present context, 'the plurality of consumption meters' is understood to preferably comprise a substantial number of consumption meters compared to the utility network in question, so as to preferably significantly increase the amount of data available for the monitoring compared to measurement stations that may be available at network hubs. Also, preferably the number of said consumption meters exceeds the number of primary and secondary pipes in the network. Preferably, at least one of said consumption meters is arranged at a consumer site on each of the secondary pipes in the network, preferably also at least one of said consumption meters is arranged at a consumer site on at least a portion of the tertiary pipes of the network, e.g. at least one of said consumption meters on each tertiary pipe of the network.

It may be preferred that the plurality of consumption meters cover 10% or more of all consumption sites in the utility network, such as more than 20%, such as more than 30%, such as more than 40%, such as more than 50% of all consumption sites in the utility network. Of course, more consumption meters being arranged to provide the second parameter means a more sensitive monitoring system, however even by a relatively low amount of consumption meters with these properties distributed in the network will significantly increase the possibility of providing a sensitive monitoring system. In absolute numbers, the plurality of consumption meters arranged to measure the second parameter(s) at consumer sites can be 10-50 in a small utility network, 50-500 in larger networks, or 500-5000 or even more, in large networks.

The plurality of parameters may comprise at least two of said second parameters, e.g. all three of said second parameters. The plurality of parameters may comprise at least one third parameter indicative of one of: pressure, such as pressure level, of the fluid at the consumer site, and temperature of the fluid at the consumer site. Further parameters allow further possibilities of providing cross correlation to allow determination of more states of the utility network and/or to provide data allowing more sensitive monitoring.

The communication module in each of the plurality of consumption meters is preferably arranged to transmit both of data representing said plurality of parameters, and data representing the consumed quantity, via the same communication channel, e.g. represented in a Radio Frequency signal of the same frequency band. Especially, the communication module is arranged to transmit in one data packet all of: data representing the consumed quantity of the utility, data representing said plurality of parameters, and the data indicative of location of the ultrasonic consumption meter in the utility network. However, it is to be understood that the consumed quantity and data representing the first and second parameter may be transmitted at independent times, such as at different fixed or randomly selected times.

The output state of the utility network may be indicative of one of: a fluid leak and its location in the utility network, a contamination and location of its origin in the utility network, a cavitation and its location in the utility network, and a fluid pressure failure. The monitor algorithm may be arranged to process the data from the plurality of consumption meters according to a plurality of different predetermined analysis algorithms, and to compare respective outputs of these analysis algorithms with respective different predetermined reference values, and to generate a plurality of different outputs indicative of different states of the utility network accordingly, e.g. states indicative of more of the above mentioned options.

The monitor algorithm may comprise a hydraulic model of the utility network, and wherein an output from said analysis algorithm is provided as update data to said hydraulic model. Thus, in this way, the additional data provided by the consumption meter according to the invention may be used to provide a dynamic hydraulic model, and the hydraulic model can be used as part of an automatic monitoring of the state of the utility network. Especially, a state may be determined in response to an output from said hydraulic model, such as determining a state indicative of a measure of roughness of a section of a fluid pipe of the utility network and comparing to a predetermined reference roughness value.

The monitor algorithm may be arranged to provide an input to a controller for controlling a plurality of pumps distributed in the utility network to provide a fluid pressure in the utility network.

The analysis algorithm forming part of the monitoring algorithm preferably involves at least one of: a correlation analysis between some or all of the plurality of parameters, a trend analysis of the plurality of parameters, and a regression analysis.

The monitor algorithm may comprise a pattern recognition algorithm involved in generating said output indicative of the state of the utility network.

Also, the monitor algorithm may comprise a machine learning algorithm arranged to adapt the generation of the state of the utility network in response to said first and second data collected over time.

Thus, the monitor algorithm is preferably arranged to collect a time series of the data from the plurality of plurality of consumption meters over a period of time, such as several days, such as several months, and wherein the analysis algorithm is arranged to process said time series of data from the plurality of consumption meters, and to determine a measure of temporal changes in said plurality of parameters. Preferably, time series data are stored and/or tracked in the form of values representing statistical correlation values for groups of consumption meters rather than storing large time series of first and second parameters received from all of the consumption meters in the utility network.

The state may be an error state, and wherein the computer is arranged to generate a warning in response to an error state being determined by the monitor algorithm. In this way, an automatic monitoring system can be implemented, e.g. with the warning being in the form of sending an SMS, an email, displaying a warning message on a display, providing an audible warning signal etc.

The second parameter of the plurality of parameters may be indicative of the noise level of the fluid at the consumer site, and wherein said state is indicative of a leak and its location in the utility network. Especially, said plurality of parameters further comprises a further second parameter indicative of one of: pressure transients of the fluid at the consumer site, or turbidity of the fluid at the consumer site. Especially, said plurality of parameters further may comprise a third parameter indicative of one of: pressure of the fluid at the consumer site, or temperature of the fluid at the consumer site. Such further data from the consumption meters allow for an even further improved monitoring sensitivity.

The state may be indicative of a contamination and location of its origin in the utility network, and wherein the second parameter of the plurality of parameters is indicative of the turbidity of the fluid at the consumer site.

The state may be indicative of a cavitation and its location in the utility network, and wherein the second parameter of the plurality of parameters is indicative of at least one of: noise level of the fluid at the consumer site, pressure transients of the fluid at the consumer site, and turbidity of the fluid at the consumer site, preferably of at least two of noise level of the fluid at the consumer site, pressure transients of the fluid at the consumer site, and turbidity of the fluid at the consumer site, more preferably of all of noise level of the fluid at the consumer site, pressure transients of the fluid at the consumer site, and turbidity of the fluid at the consumer site. The plurality of parameters may comprise a third parameter indicative of pressure of the fluid at the consumer site, or of temperature of the fluid at the consumer site. Hereby, the analysis algorithm can be further refined to calculate further correlations which can be used to further increase monitoring sensitivity.

The plurality of parameters may comprise a parameter indicative of pressure transients of the fluid at the consumer site, and wherein said state is indicative of a fluid pressure failure and its location in the utility network. The plurality of parameters may comprise a further second parameter indicative of noise level of the fluid at the consumer site, or of turbidity of the fluid at the consumer site. The plurality of parameters may comprise a third parameter indicative of pressure of the fluid at the consumer site, or of temperature of the fluid at the consumer site.

The first parameter may be contained in the data representing the consumed quantity, such as the data representing the consumed quantity comprising an accumulated fluid volume value, which, when subtracted by an earlier value, is indicative of flow rate of fluid flowing in the network at the consumer site.

The data representing the first parameter may comprise one of: a fluid volume value, and a value representing a fluid flow rate, such as an instantaneous fluid flow rate value, or a fluid flow rate value averaged over a period of time.

The plurality of consumption meters may comprises one or more ultrasonic transducers arranged for transmitting and receiving ultrasonic signals in fluid flowing through a measuring tube, and wherein a measurement circuit connected to the one or more ultrasonic transducers is arranged to generate data indicative of flow rate of the fluid flowing through the measuring tube accordingly. Especially, said one or more ultrasonic transducers and the measurement circuit are further arranged to generate at least one of said second parameters, such as two of said second parameters, such as all of said second parameters. Especially, the consumption meter may comprise a dedicated transducer arranged to provide a measurement on fluid flowing through the measuring tube, and a measurement circuit connected to said dedicated transducer arranged to generate data indicative of at least one of said second parameters. Specifically, the consumption meter may comprise a dedicated transducer arranged to provide a measurement on fluid flowing through the measuring tube, and a measurement circuit connected to said dedicated transducer arranged to generate data indicative of at least one of: pressure and temperature of fluid flowing through the measuring tube.

The data indicative of the location of the consumption meter in the utility network may comprise at least one of: a unique identification code for the consumption meter, and data indicative of the location of the consumer site, such as a GPS coordinate.

Each of the plurality of consumption meters may be arranged to measure said plurality of parameters and to transmit the data representing the plurality of parameters accordingly, in accordance with one of: a predetermined time interval, a value measured by the respective consumption meters, and in response to an external request received by the respective consumption meters.

The utility network may be one of: a water supply network, a district heating network, a district cooling network, and a gas supply network.

In a second aspect, the invention provides a method for monitoring a utility network with a plurality of consumption meters, such as ultrasonic consumption meters, arranged at respective consumer sites, such as at 10% or more of all consumption sites in the utility network, and being arranged to determine a consumed quantity of the utility at the consumer site, such as a fluid volume or an amount of heat, the method comprising

- measuring, by each of said plurality of consumption meters, a plurality of parameters comprising

  - a first parameter indicative of flow rate of a fluid flowing in the network at the consumer site,
  - at least one second parameter indicative of one of:

    • pressure transients of the fluid at the consumer site,
    • noise level of the fluid at the consumer site, and
    • turbidity of the fluid at the consumer site,

  - transmitting, by each of said plurality of ultrasonic consumption meters, first data representing

    • the consumed quantity, and
      second data representing all of:
    • said plurality of parameters, and
    • an indication of a location of the consumption meter in the utility network,

- receiving, by a main collector, all of said first and second data from each of said plurality of consumption meters,
- processing said second data from each of said plurality of consumption meters according to a predetermined analysis algorithm,
- comparing an output value from said analysis algorithm with a predetermined reference value, such as based on a statistically based baseline value measured for the utility network or based on a general database value, and

- generating an output indicative of a state of the utility network accordingly, such as an error state, such as generating a warning.

In a third aspect, the invention provides a computer executable program code arranged to perform the following steps of the method according to the second aspect, when executed on a computer:

- processing said second data from each of said plurality of consumption meters according to a predetermined analysis algorithm,
- comparing an output value from said analysis algorithm with a predetermined reference value, such as based on a statistically based baseline value measured for the utility network or based on a general database value, and
- generating an output indicative of a state of the utility network accordingly, such as an error state, such as generating a warning.

Especially, the computer executable program code may be stored on a tangible storage medium.

In general, the various aspects of the invention may be combined and coupled in any way possible within the scope of the invention. These and other aspects, features and/or advantages of the invention will be apparent from and elucidated with reference to the embodiments described hereinafter.

BRIEF DESCRIPTION OF THE DRAWINGS

Embodiments of the invention will be described, by way of example only, with reference to the drawings, in which

Fig. 1 illustrates a block diagram of a system embodiment with ultrasonic consumption meters communicating a consumed quantity as well as flow rate and noise level data over a meter reading network to allow a server to determine states of the utility network accordingly,
Fig. 2 illustrates a water utility network example with several piping branches communicating data to a server,
Fig. 3 illustrates a block diagram of an ultrasonic consumption meter arranged to detect pressure transients,
Fig. 4 illustrates a block diagram of an ultrasonic consumption meter arranged to measure a noise level of fluid inside its measuring tube by means of one of the ultrasonic transducers involved in flow rate measurements,
Fig. 5 illustrates a block diagram of an ultrasonic consumption meter arranged to measure turbidity of the fluid in its measuring tube by means of the ultrasonic transducers involved in flow rate measurements,
Fig. 6 illustrates an example of a utility network with a hierarchy of pipes involved in supplying the utility to consumers,
Fig. 7 illustrates hierarchical data processing of data received from the consumer sites in the utility network example from Fig. 6, and
Fig. 8 illustrates basic steps of a monitoring method embodiment.

DESCRIPTION OF EMBODIMENTS

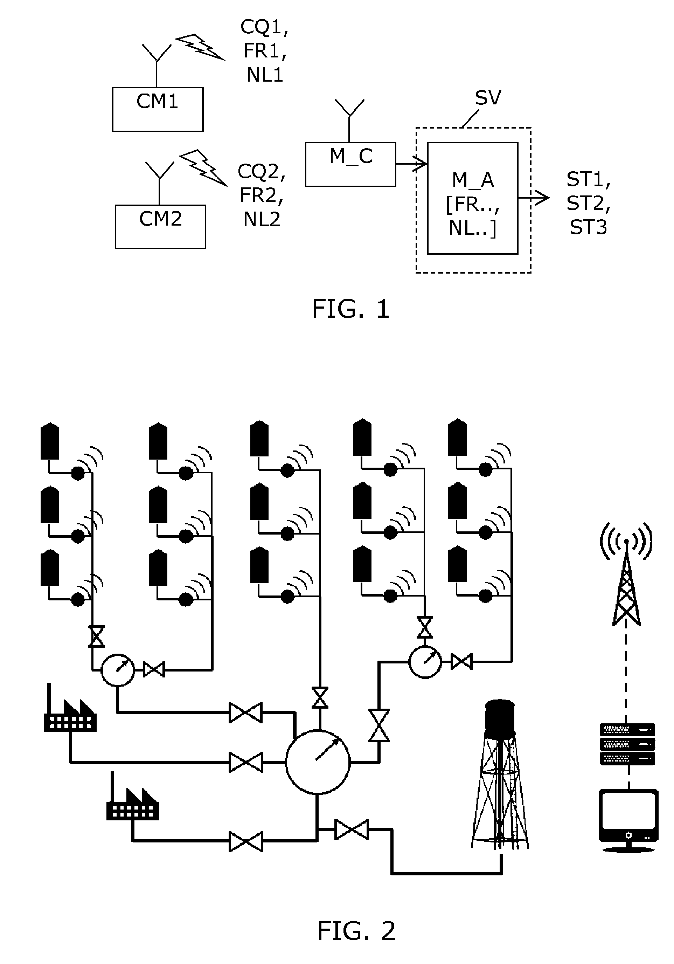

Fig. 1 illustrates a block diagram of basic elements of a system embodiment. Two consumption meters CM1, CM2, e.g. ultrasonic consumption meters, are arranged at respective consumer sites. The consumption meters CM1, CM2 are arranged to determine a consumed quantity of a utility at their respective consumer sites, e.g. a fluid volume and/or an amount of heat. Further, the consumption meters CM1, CM2 are arranged to measure a first parameter indicative of flow rate of a fluid flowing in the network at the consumer site. Still further, the consumption meters CM1, CM2 are arranged to measure at least one second parameter indicative of one of: pressure transients of the fluid at the consumer site, noise level of the fluid at the consumer site, and turbidity of the fluid at the consumer site. In some embodiments, the consumption meters CM1, CM2 can measure two of or all of these second parameters. In the illustrated embodiment, the consumption meters CM1, CM2 can measure fluid flow rate as well as noise levels of the fluid at the consumer site, and they each comprise a wireless communication module arranged to transmit the consumed quantity CQ1, CQ2, and flow rate FR1, FR2, and noise level NL1, NL2, e.g. communicated as four or five 1/1-octave noise level values. All of these data CQ1, CQ2, FR1, FR2, NL1, NL2 are communicated via one common communication channel. Not necessarily at the same time or in the same data packet structure, but all utilizing an existing remote reading communication channel, and sent together with a unique identification code to allow indication of a location of the consumption meter in the utility network. Data CQ1, CQ2, FR1, FR2, NL1, NL2 from all consumption meters CM1, CM2 are collected by a main collector M_C. The flow rate data FR1, FR2, the noise level data NL1, NL2, and the linked identification codes, are provided by a time stamp when received, so as to allow at least an approximate timing of when the data FR1, FR2, NL1, NL2 were measured. Of course, if the consumption meters CM1, CM2 include a precise clock, the consumption meters CM1, CM2 may themselves add a time stamp to the data FR1, FR2, NL1, NL2 in addition to the unique identification code.

The flow rate and noise level data FR1, FR2, NL1, NL2 are then applied to a server SV which executes a monitoring algorithm M_A thereon according to a predetermined analysis algorithm. The analysis algorithm preferably involves a correlation analysis between the flow rate data and the noise level data. An output value from the analysis algorithm is then compared with a predetermined reference value, e.g. based on a statistically based baseline value measured for the utility network or based on a general database value. Finally, the monitor algorithm generates an output indicative of one or more different states ST1, ST2, ST3 of the utility network accordingly, e.g. an error state, and the server may in addition generate a warning in case a critical state is observed.

Fig. 2 shows a block diagram of an example of a utility network in the form of a water distribution network with a main pipe leading water from a tank via hubs (indicated as circles) and a pipe network to the consumer sites. The black circles indicate a remote reading consumption meters which can wirelessly transmit flow rate data and one or more of: noise level data, pressure transient data, and turbidity data to a main collector. A server executes a monitoring algorithm which calculates a state of the utility network accordingly, and outputs the result on a display to the utility network operating personnel.

The invention is based on utilizing features from exisiting remotely read consumption meters for district heating, district cooling and potable water in the form of so-called smart meters. This opens up for the possibility of generating and processing real time data on a large scale. By smart meters is understood electronic meters with internal microprocessors having computational power in abundance. This power can be utilized to perform more complex measurements and analyses by the individual meters, resulting in measurements or assessments of more physical quantities than just the consumed utility. These quantities can be communicated via the automated meter reading (AMR) infrastructure to a server at a data management center, typically, but not by necessity, operated by the utility provider.

Consequently, for a very little extra effort and cost, important information about the status of the utility supply network can be obtained in abundance by introducing smart meters with AMR interface. Since data is available from potentially thousands of sites geographically distributed across the distribution area, a new approach can be taken to the analysis. Now statistical methods can be applied in the form of correlation functions, regressions etc. Hence, it becomes possible from combination of various types of physical data combined with statistics on the plurality of measurement sites to assess the general state of the underlying distribution system. By combining the knowledge from the population of meters with external data, like meteorological or logistic data, it even becomes possible to predict the future state of the system. For example, an observed drop in pressure, measured at a number of consumers in a street may indicate either a partially clogged pipe or a pipe burst. However, if the fluctuations in pressure and/or the noise level in the pipes are combined with the pressure data, it becomes possible to discern the possible fault scenarios. Moreover, taking into account the geographical location of the measurement sites, it becomes possible to calculate the location of the fault, thereby reducing the cost and public disturbance associated with digging up the ground to expose the faulty pipe. Now, taking into account the flow rate and thereby the water loss it can be calculated how much soil has been flushed away under the street and hence assess the danger of road collapse. By linking to external data like expected precipitation, the strain on sewers due to the leak can be estimated.

The utility consumption meters are enhanced to measure more physical quantities than simply the amount of the consumed commodity. The combination of two or more of the aforementioned physical quantities can, when processed in big volumes by appropriate algorithms, reveal correlations and patterns which can be linked to the physical state of the distribution network, healthy or faulty. This discipline is well-known from computer science, and is in general referred to as data mining.

Besides deriving the actual state of the network, the invention holds the potential of being able to predict the wear on the constituents of the distribution network, thereby assisting the utility manager with the asset management by providing lifetime predictions given the current operating parameters. As a result, the lifetime can be maximized and expenditures associated with replacements of parts reduced.

In addition, the invention can help to solve the problem of optimizing pump operation in a dynamic hydraulic system, i.e. in a hydraulic system in which the relationship between pressure and flow velocity is not constant in time. This is the case when the number of consumers as well as their consumption drawn from the network changes in the course of time. Depending on the various diameters of the string of pipes leading from the utility plant to the consumer, the withdrawal of the commodity at a certain rate requires certain additional pump work in order to simultaneously keep the pressure at all consumer sites within tolerances. Moreover, deposits are commonly building up inside distribution pipes, thereby altering effective cross sections and friction coefficients can be taken into account from subsets of flow rate and pressure data to continuously update the parameters of the hydraulic model.

Still further, it is possible to expand the range of the system to include external data, not generated within the utility network itself. Such data could be meteorological in the form of precipitation temperature or humidity, demographic, logistic or financial in the form of electricity prices currency exchange rates etc. As a result, it will be possible to predict things like:

- The amount of waste water to be handled by drains and cleaning stations based on precipitation and water consumption patterns.

- The level of open freshwater reservoirs based on precipitation, evaporation and consumption.
- The amount of disinfectant which should be added to the water based on the rate of bacterial growth at the relevant temperature in the system.
- The cost of operation based on current energy prices and exchange rates.
- The future need for expansion, maintenance and optimization of the distribution network.

Given the amount of data available and the processing power of modern computers, the type and amount of information which can be extracted from the vast number of smart meters installed in a metropolitan distribution system is huge. Hence, the following embodiments will serve to elucidate some scenarios in which the generated information can be used.

Leak detection

In one embodiment the utility consumption meters are equipped with acoustic noise sensors, pressure sensors and temperature sensors. Moreover, at the distribution hub, dedicated meters are located to record flow rate, pressure, and temperature. Consequently, they can return data describing flow rate, consumed volume, noise level and fluid temperature. A leak in a main supply pipe providing the fluid to a neighbourhood will manifest itself by increased noise carried by the pipes to be detected by the consumption meters. In addition, the temperature of the fluid measured by the consumption meters will be different than the expectation based on the measured flow rate at the distribution hub from which the pipe emerges. The sum of volumes measured at the consumer sites will differ from the volume measured at the distribution hub. Finally, if the leak is sufficiently big, the pressure at the consumer sites will be significantly smaller than anticipated. Furthermore, a comparison of noise excess, pressure and temperature at the different consumer sites may be used to narrow in the search for the leak.

Another scenario is the burst of a household supply pipe. Frequently, the consumption meter is placed in a pit or a similar compartment located at border between the street and the private property of the household. Now, the pipe leading from the meter into the household is legally the property of the household and the water spillage associated with a burst of the pipe is considered part of the household consumption. Unless the burst is discovered quickly, the result may be a large water bill to the household and often such cases end up in court. Hence, it is in everybody's best interest to quickly discover such a burst. This is again possible by combining the data types associated with the volume, temperature, noise level and/or pressure. The system can furthermore compare to historical data of the household as well as neighbouring households to establish the presence of the burst.

The plurality of data types and measurement sites serve to more accurately infer the presence of the leak as well as its location. Obviously, subsets of the data types mentioned above may prove sufficient for performing leak detection. Assuming sufficient computational power, the system may over time learn the signatures associated with various fault scenarios in the distribution network with more accurate diagnostics as a result.

Hydraulic modelling

In the context of the present invention, having data representing simultaneously sampled flow rate, pressure and temperature data from consumer sites and strategically important distribution hubs can be combined and entered into the calculation of a hydraulic model for the entire distribution network. A number of hydraulic models are available, spanning from the simple Bernoulli treatment to the full Navier Stokes equations. Typically, to moderate calculations, simplified forms of the Navier Stokes equations are used to model hydrodynamic pipe flow. Since valve settings change and consumption varies over time, the parameters of the model will have to be updated in real time in order to obtain accurate results. The benefits of building and maintaining such a model at the data center are several:

- If more wells and reservoirs are feeding the network, the model predicts the mixing and can consequently predict which supply sources are feeding specific areas.
- The model can be used to estimate if certain water sources are obsolete and can be shut down, or alternatively, if more water sources are needed to fulfil demands.
- By including historical data, the model can be used to predict shortage of supply in certain areas before it happens, thereby rerouting water from reserve sources.
- Faulty conditions can be revealed by the model. This could be valves that do not open or only opens partially. Similarly pipes which are partially clogged by mineral deposits and in need of replacement can be discovered. Larger pipe bursts can also be revealed by the model.
- Contamination spread can be estimated by means of the model if the point and time of origin are known. This will be elaborated in more detail below.

Contamination detection and location

The contamination of a water distribution system can happen in several ways, like a busted pipe allowing soil and bacteria to enter the system, flooding of waste water resulting in spillage into the drinking water system, erroneous filter flushing at the utility plant or even acts of terrorism. To minimize health risks to the population and water loss from the pipe cleaning, which usually involve flushing and or disinfectant additives, it is imperative to identify the source of origin and establish the degree of spreading as quickly as possible. Towards this end, a number of turbidity sensors distributed throughout the network, at hubs and at the households, will detect the contamination at the earliest time possible and transmit the discovery back to the data central. Here, comparison with adjacent sensors can be carried out to roughly establish the point of origin for the contamination.

Further refinement can be made if the elements of a hydraulic model are included. The hydraulic model can be used to tell the flow direction and speed at the time interval leading up to the detection time. Hence, backtracking contamination levels eventually pinpointing the contamination source is feasible. By including temperature data and bacterial growth models, the microbial concentration can be estimated and compared to limiting values to ensure the health of the consumers.

Cavitation detection

Deleterious to hydrodynamic systems is the presence of cavitation. Cavitation occur typically when the fluid travels at high velocities past narrow orifices or similar. The resulting pressure drop in the fluid results in a total pressure being smaller than the saturated vapour pressure of the fluid at its present temperature. As a result, the fluid goes from liquid to vapour phase and bubbles occur. Downstream from the orifice, when the total pressure again exceeds the vapour pressure, the bubbles implode with shock waves as a result. The whole process is rather violent and results in significant wear on the surrounding boundaries. Typically, cavitation is seen at half open valves, in circulatory pumps, with flow around sharp corners as well as other obstacles in the fluid flow path.

Clearly, the presence of cavitation is undesired and information hereof is certainly of value to the distribution system operator. By combining information about the noise level, pressure transients, temperature and turbidity it is possible to establish if cavitation is taking place in the vicinity of the sensors. The impact on the different sensors can be listed as follows.

- The noise emitted by the imploding bubbles is distinctive high frequency and differs from other ambient noises. This can be picked up by the noise detector.
- The whole cavitation process gives rise not only to a static pressure drop but to pressure transients as well. Nearby pressure sensors will react to this.
- To a turbidity sensor the air bubbles will look like impurity particles suspended in the fluid. Hence the sensor will return a higher than normal level of turbidity.
- A temperature sensor will not serve to directly detect turbidity, but the saturated vapour pressure of water is strongly dependent on the temperature. Hence, if temperature is known together with the pressure drop, it can be calculated if there is risk of cavitation. This aspect is important, since cavitation can occur with very low intensity near the vapour pressure limit. Such low intensities can be difficult to detect by noise detectors and pressure sensors, but they can still be of great harm to pipe system.

Cavitation is a local phenomenon, taking place near the critical orifice. However, depending on the pressure and temperature conditions in the pipe conduits, remnants of the vapour bubbles produced can travel far to be detected by the turbidity sensors downstream. Similarly, the noise from the shockwaves can travel significant distance to be detected by noise sensors. Here it is of importance that a number of sensors record the signatures of cavitation to allow for localization of the source.

Pump control

Within the framework of the present invention, having second parameter data available, the use of a hydraulic model, as described above, is also beneficial to the operation of feeder and booster pumps of the distribution system. Usually, great care is being taken by the utility providers to ensure excess water pressure in the distribution system. The reasons for this are several; in apartment blocks, the pressure difference can be considerable between the ground and the top floor, hence, certain minimum pressure must be maintained to guarantee sufficient flow from taps. Often in households, the hot water is produced by a heat exchanger running district heating water in one loop and drinking water in the second loop. In case of a leak in the heat exchanger, to avoid spillage of unhealthy district heating water into the hot bathing water, a higher pressure is maintained on the drinking water loop.

In the past, the pressure in the drinking water system was maintained by means of an air pressurized expansion tank. However, to avoid bacterial growth in these voids of still water, more and more utility plants now use booster pumps to build up the water pressure. This comes with the added expense to electricity for operating these pumps. Hence, it is desirable to operate the pumps at the minimum possible revolution rate to ensure a prescribed pressure at the end consumers. A hydraulic model is linking these two parameter sets enabling the use of an optimization algorithm to minimize pump energy consumption, for instance by distributing the work load between more pump stations.

Asset management

The wear of pipes is mainly governed by the oxygen content of the water and pressure transients in the distribution system. The former is usually high due to oxygenation process taking place at the utility plant, while the latter can by difficult to detect end even more difficult to control. However, pressure transients can be sampled, statistically quantified and transmitted back to the utility provider. Here, the data can be used for process control to minimize strain on the distribution system. Moreover, the information can be used to quantify the accumulated strain of the pipe system helping to predict its lifetime. Besides the obvious advantage of better process control, the pressure transient data also enables the utility management to plan future investments with better accuracy.

Quality control

The measurement of water quality parameters like turbidity, temperature and/or concentrations of chemicals like chlorine, pesticides etc. close to or at the consumer sites, gives the utility manager the possibility of building a real time picture of potential quality problems. Combined with remote controlled valves this data analysis can be used to quickly react to situations in the distribution system, where the health of the general public is at risk. The strength of this embodiment lies in the number of measurement sites, which minimizes the possibility of false alarms.

In the following, three different consumption meters will be described. These are merely examples serving to illustrate how measuring principles for measuring second parameters: pressure transients, noise level and turbidity, respectively, can be incorporated into an consumption meter which in addition can measure flow rate. In all of these examples, the second parameter can be measured in connection with one single flow tube or measuring tube of the consumption meter which also serves to measure the consumed quantity, i.e. including measurement of fluid flow. Thus, such consumption meters can provide the second parameter without the need for further intervention with the piping system at the consumer site than already is the case when mounting a normal consumption meter.

It is preferable to use a consumption meter based on the ultrasonic flow meter principle, since such meters are typically suited for high precision measurement of fluid flow rate based on the measurement of fluid flowing in a flow tube by use of known operation principles for transit time flow meters by using ultrasonic waves. A typical ultrasonic consumption meter has a housing with a measurement circuit inside which is electrically connected to two spaced apart ultrasonic transducers, e.g. piezo electric transducers. The housing with transducers is arranged for mounting onto a metallic or polymeric flow meter tube with threaded ends for mounting in an existing piping installation. Further, the housing with measurement circuit and typically also a battery, is preferably watertight so as to avoid any humidity causing damage to the measurement circuit and battery inside the housing. By 'measurement circuit' is here understood the necessary electronic circuits adapted to control the function of the ultrasound transducers, so as to allow measurement of fluid flow according to known principles of ultrasonic transit time. Especially, the measurement circuit may be arranged on one single PCB capable of generating as output a pulse train indicative of the measured fluid flow rate. By 'transducer' is understood the piezoelectric element with its electrodes, conductive layers and membranes, as appropriate.

In one embodiment of the system, at least part of the consumption meters comprise an integrated pressure sensor serving to measure pressure transients of the fluid at the consumer site. The pressure sensor is arranged to measure fluid pressure inside a flow tube. In an ultrasonic consumption meter embodiment, one or more ultrasonic transducers are arranged to measure a fluid flow rate in a flow tube, especially a flow tube with a through-going opening for passage of the fluid flowing in the network at the consumer site, wherein a pressure sensor is arranged for performing measurements of pressure in said flow tube. Such consumption meter may comprise a data processing unit arranged for processing data related to the measurements of pressure, so as to determine at least one statistical parameter in response to a plurality of measurements of pressure, and wherein said at least one statistical parameter serves to represent a second parameter indicative of pressure transients of the fluid at the consumer site.

By a 'statistical parameter' is understood a parameter represented by a value calculated according to a predefined algorithm in response to a plurality of measured values, each representing single pressure measurements, so as to provide a descriptive and condensed representation of the plurality of single pressure measurements. Simple examples are: peak value, average, and standard deviation. More complex algorithms involve e.g. a Fourier transform to provide e.g. distribution of frequencies of pressure data. In the following, further details regarding preferred statistical parameters to describe the occurrence of pressure transients will be described.

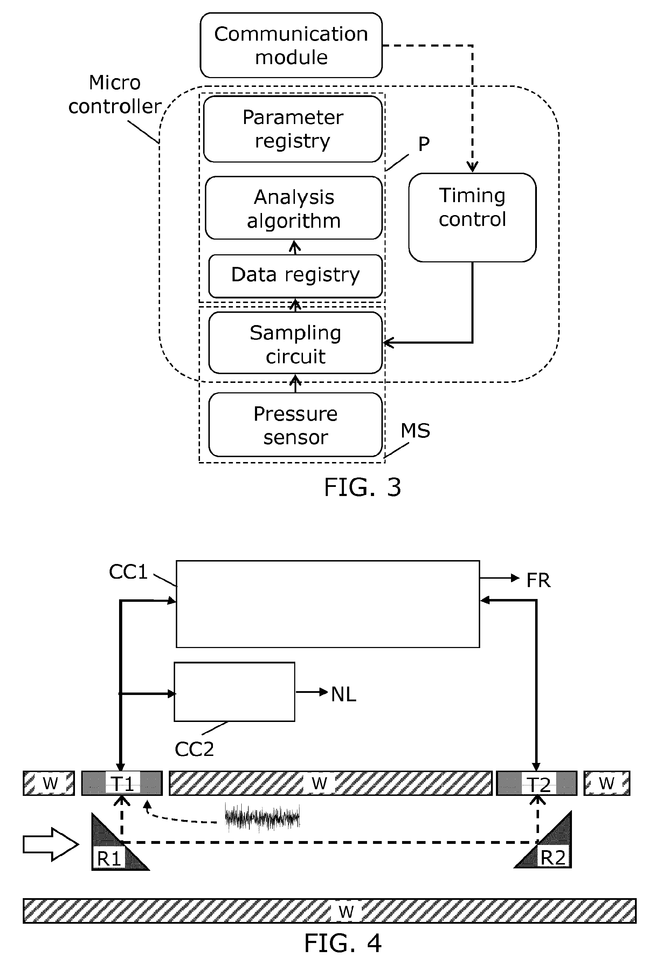

Fig. 3 shows a block diagram of a possible implementation of such described integrated consumption meter and pressure sensor for measuring pressure transients in the fluid flow at the consumer site. A pressure measurement system MS, and the data processing unit P which preferably forms an integrated part of the ultrasonic consumption meter. A pressure sensor mounted to sense the fluid pressure in the ultrasonic flow meter measuring tube, provides an analog electrical signal in response to the sensed pressure, and this analog electrical signal is provided to a sampling circuit which samples the signal and converts samples into pressure values. The sampled pressures are stored in a raw data registry.

An analyzing algorithm performs suitable statistical analysis on the raw data to extract the desired information described by a number of statistical parameters. The statistical parameters are stored in the parameter registry together with a timestamp indicating the point of time for the measurement. A communication module transmits the contents of the parameter registry, either with regular time intervals or when requested to do so via a communication network. Alternatively, the transmitter can be requested to perform a single set of pressure measurements, or a number of sets of measurements via the communication network. A timing control serves to control timing of both data sampling and may, as indicated, be controlled in response to information from the communication module. The data processing unit P and part of the measurement system MS can be implemented by a micro controller, as shown in Fig. 3.

In the following, a description of various statistical parameters that can be determined for the pressure transient data will be described. Especially, the pattern of pressure transients, measured in a time sequence of pressure samples (e.g. 128 samples obtained with a 0.1 second time resolution), can be described by appropriate statistical parameters, such as:

1) The coefficients of a Fourier transform, e.g. fast Fourier transform technique (FFT), of the time series of measured pressure values. The resolution of the Fourier transform is chosen as a compromise between the amount of data to be transmitted and the amount of information about the transients desired to transmit.

2) The statistical moments of the probability distribution, preferably including the third statistical moment which reflects skewness of the distributed pressure samples.

3) Maximum likelihood estimation, where an estimator is maximized with respect to one or more parameters of a probability distribution model.

4) Average and standard deviation, since most physical processes in nature gives rise to a probability distribution which is a normal distribution.

5) Histogram values. As a simplified form, a histogram can be used, representing a probability distribution function.

The pressure of a fluid can be measured using a variety of pressure measurement techniques using various sensor or transducer principles. These include: 1) piezoresistive semiconductors, 2) piezoresistive metallic films, 3) capacitive sensors, 4) mechanical spring compression, 5) inductive sensors, 6) piezoelectric sensors - especially one or more piezoelectric sensors which are also involved in ultrasonic fluid flow rate measurements in the ultrasonic consumption meter, 7) optical sensors, e.g. fiber optical strain gauges based on Bragg gratings inherent in the fiber, and 8) resonant sensors with one or more membranes set in oscillation around their resonance frequencies and having one side exposed to the fluid.

In some embodiments, the system comprises a consumption meter arranged to measure a noise level of the fluid at the consumer site. Especially, such consumption meter may comprise a flow tube with a through-going opening for passage of a fluid between an inlet and an outlet, first and second piezoelectric transducers arranged at the flow tube for transmitting and receiving ultrasonic signals transmitted through the fluid, a first control circuit arranged for operating the first and second piezoelectric transducers, and being arranged to generate a signal indicative of the flow rate of the fluid accordingly, and a second control circuit arranged for operating a sensor arranged at the flow tube for detection of vibro-acoustic signals of the flow tube, and being arranged to generate a signal indicative of noise level of the flow tube accordingly. Here, the term 'vibro-acoustic signals of the flow tube' should be understood as covering vibro-acoustic signals of the fluid in the flow tube and vibro-acoustic signals of the flow tube *per se.*

Fig. 4 illustrates a sketch of an example of a consumption meter embodiment capable of measuring a second parameter indicative of noise level. Two piezoelectric ultrasonic transducers T1, T2 are arranged in the wall W of a flow tube in which fluid flows in the direction indicated by the large arrow to the left. The two transducers T1, T2 are operated by a first control circuit CC1 to transmit and receive ultrasonic signals via the transducers T1, T2, so as to be able to generate a flow rate FR signal indicative of the fluid flow rate based on known ultrasonic transit time measurement techniques. In the setup sketched, reflectors R1, R2 serve to direct the ultrasonic signals (dashed arrows) along the fluid flow in the flow tube. The first piezoelectric transducer T1 is also used as sensor for vibro-acoustic signals in the flow tube, i.e. it is used to provide a second parameter indicative of noise level of the fluid at the consumer site. A second control circuit CC2 is connected to the first piezoelectric transducer T1, and being arranged to generate data indicate of noise level NL based on a signal received from the first piezoelectric transducer T1.

The first and second control circuits CC1, CC2 may be operated simultaneously, or it may be preferred that they are controlled so that flow rate FR and noise level NL are measured at non-overlapping operating time periods. However, due to the spectral difference in the vibro-acoustic signals to be picked up for detecting leakage or other anomalities and the ultrasonic signal involved in flow rate measurements (up to 20 kHz versus a few MHz), the second control circuit CC2 may be arranged to spectrally filter the output from the first transducer T1. This can allow pick up of vibro-acoustic signals simultaneously with the first transducer T1 taking part in flow rate measurements controlled by the first control circuit CC1.

It is to be understood, that such consumption meter for measuring a fluid flow noise level may comprise a dedicated transducer which is more sensitive to vibro-acoustic signals in the frequency range relevant for detecting anomalities, i.e. signals relevant for generating a noise level value which is useful in further processing in a utility network monitoring system. Especially, such a dedicated further transducer, separate from T1 and T2, may comprise a piezo-lectric element, e.g. disc-shaped, with a first surface facing the flow tube, and wherein a second surface opposite the first surface of the piezoelectric element is supported by a rigid backing of an acoustically dampening material, such as a dampening material comprising rubber.

In some embodiments, the system comprises a consumption meter capable of measuring turbidity of the fluid at the consumer site. Such consumption meter may be an ultrasonic consumption meter comprising a flow tube with a through-going opening for passage of a fluid between an inlet and an outlet, wherein the flow tube comprises a turbidity measurement section between a first section end and a second section end. A first transducer is arranged for transmitting ultrasonic signals through the fluid in the turbidity measurement section, so as to provide a first ultrasonic standing wave between the first and second section ends. A receiver transducer is arranged for receiving ultrasonic signals scattered on particles in the fluid flowing through the turbidity measurement section. A control circuit is connected to the first transducer and the receiver transducer, wherein the control circuit is arranged for operating the first transducer and to generate a signal indicative of the turbidity of the fluid in response to signals received from the receiver transducer. Especially, the first transducer may be involved in measuring a flow rate of fluid flowing in the flow tube. More specifically, the control circuit may be arranged to operate the first transducer in a first and a second operation time intervals, wherein the first and second operation time intervals are not overlapping, wherein the control circuit is arranged to operate the first transducer for measuring the turbidity of the fluid flowing in the flow tube during the first operation time interval, and wherein the control circuit is arranged to operate the first transducer for measuring the flow rate of the fluid flowing in the flow tube during the second operation time interval.

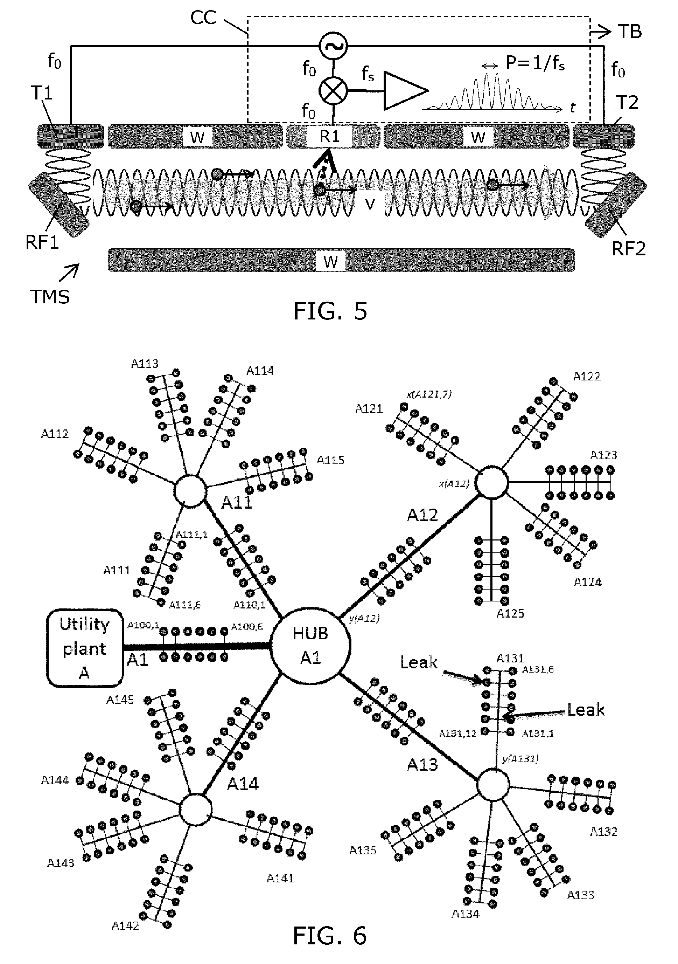

Fig. 5 illustrates a sketch of a consumption meter embodiment further arranged to measure turbidity. A flow tube has two ultrasonic transducers T1, T2 arranged in its wall W. Section ends of a turbidity measurement section TMS are constituted by respective ultrasonic reflectors RF1, RF2, e.g. polymeric or metallic reflectors. Thus, the transducers T1, T2 are positioned out of the fluid flow, along the wall W of the flow tube, and their ultrasound signals are then directed in the flow direction, such that the first and second ultrasonic standing waves generated by the respective transducer T1, T2 between the reflectors RF1, RF2 is along the flow direction. The dark circles indicate particles flowing along the fluid in the flow tube with flow rate v.

A receiver transducer R1 is arranged at the wall W of the flow tube at a central position between the two transducers T1, T2. For one particle, an ultrasonic response to the ultrasonic standing wave is indicated with a dashed arrow towards the receiver transducer R1, which then captures the ultrasonic response from the particle. With an ultrasonic standing wave with frequency $f_0$, the expected frequency $f_s$ of high intensity scattering of a particle in a fluid with flow rate v is: $f_s = 2(v/c)f_0$, where c is the speed of the ultrasonic wave in the fluid. Thus, a high intensity response from particle scattering of the ultrasonic standing wave can then be expected with a period time of $P = 1/f_s$ at the receiver transducer, as indicated in the response versus time t to the upper right corner of Fig. 5.

A control circuit CC comprises an electric generator that applies electric drive signals to the transducers T1, T2 at the single frequency $f_0$, receives the response from the receiver transducer R1 and generates in response a signal indicative of turbidity TB. As indicated, the signal from the generator may be applied to a multiplier together with the response from the receiver transducer R1, thus demodulating the received signal. Further, the control circuit CC preferably applies a filtering, e.g. involving Fast Fourier Transform, so as to explore the actual high intensity response from particles at the expected periodicity P. The resulting signal can then be quantified so as to result in a measure of particle density in the fluid, i.e. a measure of turbidity.

It is to be understood that the same two transducers T1, T2 can be used as well for ultrasonic flow rate measurement, such as known in the art, and thus preferably the flow rate v can be measured with the device as well, thus delivering the flow rate v to the control circuit, thereby allowing the above described calculation of $f_s$.

It is to be understood that all of the mentioned measurement principles for the second parameters (pressure transients, noise level, and turbidity) can all be combined into one consumption meter. However, in other system embodiments, different types of consumption meters with different measurement facilities may be distributed in the network, e.g. a portion without the second parameter capabilities (i.e. regular consumption meters), a portion (>10%) with flow rate and noise level capabilities, a portion (>10%) with flow rate and pressure transient capabilities, and a portion (>10%) with flow rate and turbidity capabilities. This may still be sufficient to provide valuable information for performing correlation calculations and thus gain different states of the utility network, even though not all types of data are available from all consumer sites.

In the following, a specific example will be given to illustrate one way of implementing a statistical analysis algorithm as part of a monitoring algorithm for monitoring leaks in a water distribution network. The example serves to illustrate the way to handle data representing measurements at the consumer sites and received e.g. at fixed time intervals (at intervals such as 10 minute, 1 hour, or several hours, or each day) from a large number of consumption meters in a utility network hierarchy.

Fig. 6 shows an example of a water distribution network, where the unfilled circles represent distribution hubs with associated sensors for flow, pressure, temperature and noise at the junctions. The filled circles represent consumption meters at the consumer site, and these consumption meters comprise sensors and communication capabilities for measuring and transmitting data representing flow rate, pressure (e.g. pressure transients), temperature and noise level. The combined datasets generated by a set of sensors at a specific position is denoted $x(pipeid)$ if the position is at the outlet of the pipe, and $y(pipeid)$ if the position is at the inlet of the pipe. Hence, $x(123,4) = \{q(123,4); p(123,4); T(123,4); n(123,4)\}$, where q is flow rate, $p$ is pressure, $T$ is temperature and n is noise level. The pipe identifier $pipeid$ is a unique label with a number of digits in the label indicating the position of the pipeline in the network hierarchy. Hence, A1 is the main pipe leading water from the plant A to the main hub HUB A1. A11 is a secondary pipe leading from main hub HUB A1 to secondary hub, etc. In this example, the consumer supply pipe is at level 4. For example the pipe A143,4 is the 4$^{th}$ supply pipe on the 3$^{rd}$ tertiary pipe on the 4$^{th}$ secondary pipe on the 1$^{st}$ main pipe.

Obviously, an immense amount of data is generated in this network. To handle this data it is preferred to distil the combined datasets x and $y$ according to the pipeline hierarchy outlined above. By forming averages and standard deviations of subsets, say at the tertiary level, the amount of data can be reduced to a level, which allows to build a time history and continuously monitor the development of this subset of data. Hence, in this way also producing base line values representing values for a "normal" state of the utility network, thereby creating reference values to be used for comparing with values obtained at a given time, thereby determining e.g. if the state of the utility network is "normal" or outside threshold values to be considered as an error state.

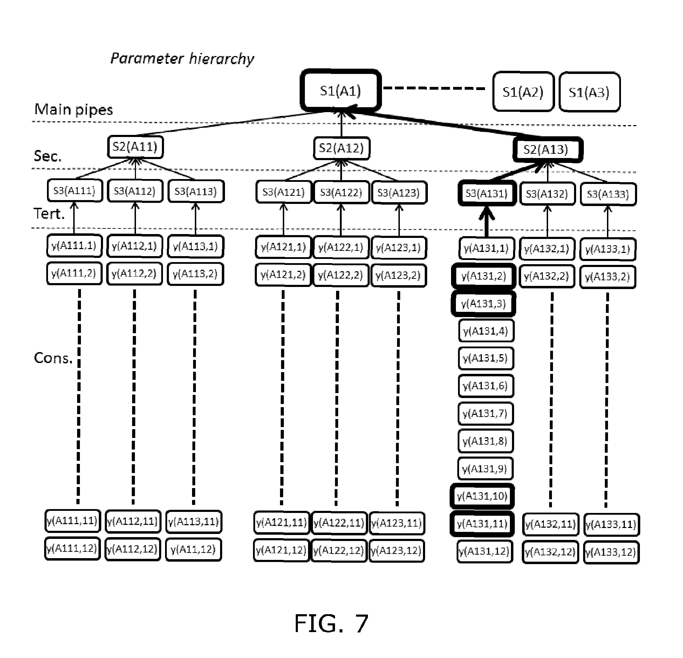

Fig. 7 serves to illustrate the data structure involved in the network hierarchy in Fig. 6. Subsets are denoted $S3(pipeid)$, like $S3(A132)$ for example.

$$\text{Now, } S3(A132) = \{\text{AVERAGE}(x\text{'s}), \text{STD}(x\text{'s}), \text{MAX}(x\text{'s}), \text{MIN}(x\text{'s})\},$$

where x's are all the x datasets produced by sensors on the pipeline $A132$. If the network is very large, it may be advantageous to further distil the data at the secondary level and form, say

$$S2(A13) =$$
$$\{\text{AVERAGE}(S3(A13k\text{'s})), \text{STD}(S3(A13k\text{'s})), \text{MAX}(S3(A13k\text{'s})), \text{MIN}(S3(A13k\text{'s}))\},$$
$$\text{where } k=1,2,3... \ .$$

Finally, it may be preferred to form the primary datasets from the secondary subsets as

$S1(A1) = \{\text{AVERAGE}(S2(A1k\text{'s})), \text{STD}(S3(A1k\text{'s})), \text{MAX}(S3(A1k\text{'s})), \text{MIN}(S3(A1k\text{'s}))\}$, with $k=1,2,3,....$

Depending on the amount of detail desired, it is possible to monitor the time development of $S1$'s, $S2$'s and/or $S3$'s. Note that since a larger dataset forms the basis of $S1$, the fluctuations of the parameters hereof are expected to be smaller than the parameters of $S2$, which in turn fluctuate less than the S3 parameters. If N sensors contribute to the values of $S1$, the change in data, dx, from a single sensor will change the average by $d\mu = dx/N$, while the uncertainty expressed as the standard deviation is $\sigma = kN^{-1/2}$. Hence, if the change $d\mu$ is preferred to be detected, it preferably exceeds $\sigma$, that is, $dx > kN^{1/2}$. This shows that in order to detect leaks in the smaller pipes, like tertiary or quaternary, it is preferable to monitor $S3$, while $S2$ and $S1$ are better suited to reveal larger pipe leaks where more sensors contribute and/or sensor excursions are larger.

A leak will reveal itself in several ways:

- The noise level is increased relative to the level of normal operation at the specific time of day and month.
- The volume budget, obtained by integrating the flow sensor data over suitable time, does not add up. This means that the volume sent through a pipe, measured at the inlet hub, does not match the combined volumes leaving the pipe, measured at a secondary hub or at the consumer sites fed by the pipe.
- The pressure drop across the defect pipe may appear unusually high.
- The temperature at the pipe outlet may be unusually low due to the continuous additional amount of cold water drawn through the pipe.

All of these conditions may be monitored by keeping track of the historical development of the *S* parameters, e.g. by storing the S parameters back in time. The full or partial combination of the conditions listed above may now serve as the indicator of the presence of the leak. Hence, the monitoring algorithm outputs that the distribution system is in a faulty state. Moreover, by tracing through the hierarchy of *S* parameters, it is possible to, step-by-step, narrow in the identity and hence the position of the leaky pipe. It should be stressed that the power of this leak detection scheme lies in the *amount* of data produced by a large number of sensors distributed throughout the network. In particular, the large number of sensors enables the distinction between a leak in the main pipe and the consumer supply pipe.

Turning now to some specific scenarios.

The main pipe *A131* is leaking at the position indicated by the arrow in Fig 6. This results in increased noise levels at several consumer noise sensors *(x(131,1)* through *x(131,12))* with the highest increase at *x(131,2), x(131,3), x(131,10)* and *x(131,11)*. As a result, *S3(A131)* will show much increased noise level and the volume balance of the pipe *A(131)*, contained in this parameter, will tip. As a consequence of the unusual values in *S3(A131), S2(A13)* will change accordingly, which in turn induces a change in *S1(A1)*.

In monitoring the utility network, an operator may evaluate the state of the network on *S1* and *S2* data levels, in a daily or hourly routine. When an anomality is observed, e.g. an error state being determined by the monitor algorithm, a closer evaluation of *S3* may be established, e.g. manually or automatically by the monitor algorithm. Now, depending on the tolerances programmed into the system, and on the level of detail chosen, an alert can be generated as a result of the changes at either the *S1, S2* or *S3* level. By simple backtracking down through the hierarchy, it can quickly be determined that the origin of the changes comes from *S3(A131)*. Access of the individual sensor readings can then be employed in a further search to narrow the location of the leak on the pipe *A131*. As mentioned earlier, the *x(131,2), x(131,3), x(131,10)* and *x(131,11)* sensors display unusually high noise levels, indicating the leak being located on the pipe section marked by the arrow. Had the noise data from the sensors instead shown a single sensor *x(131,8)* being the main contributor to the changes in *S3(A131)* noise values, the most likely location of the leak would be in the sub-pipe supplying the consumer *A131,8*.

It should be noted that the analysis just outlined can be applied to e.g. temperature data, pressure data and volume data. Moreover, a subsequent correlation between the different data types can be utilized to further substantiate the presence and location of the leak. An example of such cross correlation will now be given by considering the volume data and the noise data associated with the leaky main pipe *A131*. The occurrence of a leak on the pipe is associated with an increase in the noise level as well as the build-up of a negative volume balance $\Delta V$ defined as

$$\Delta V(A131)(\tau) = \sum_k \int_0^\tau q(A131,k)d\tau - \int_0^\tau q(A131)d\tau.$$

That is, the summed volume of all the consumption meters on the pipe subtracted by the volume sent into the pipe, measured at the pipe inlet by the sensor *y(A131)*. The volume balance can is derived by integrating the flow for the time interval $\tau$. Now, *S3(A131)* contains among other quantities, the volume v:
v = AVERAGE($\Delta$V(A131)), and
n = AVERAGE(N(A131,k)), where N(A131,k) is the noise level measured at the k'th sensor on the pipe *A131* and the average is taken over all the sensors on the pipe. It is noted that both v and n are time series of values, and it is the cross correlation of these two time series which is preferably evaluated in order to more accurately confirm the presence of a leak. The cross correlation is defined as:

$$C_{v,n}(t, \delta t) = \frac{\sum_k v(t_k)n(t_k + \delta t)}{\sqrt{\sum_k v(t_k)^2 \sum_l n(t_l)^2}}.$$

Here the sums are taken over time intervals sufficiently long to generate a well-defined correlation function. In practice, the time interval could range from 1 hour to 1 day. For perfectly correlated variables v and *n*, $C_{v,n}$ equals 1, for uncorrelated variables $C_{v,n}$ equals 0, and for perfectly anti-correlated variables $C_{v,n}$ equals -1. Now, suppose a change in noise level, *n*, is observed, which is of the order of the standard deviation of the variable, meaning that it is difficult to conclusively determine if a leak is present. By inspecting the cross correlation simultaneously, it is possible to include the volume data in the analysis, and if $C_{v,n}$ is approaching - 1 (since $v$ goes negative while n goes positive)around the same time as the increase in n is observed, it is possible with a lot more certainty to conclude that the leak is present. If no leak is present, the $v$ and n data would be uncorrelated and consequently $C_{v,n}$ zero. Hence, cross correlations can be employed as powerful indicators not only for leak detection, but for the general detection of irregularities in the distribution network.

Similarly, cavitation in the network can be detected by calculating the cross correlations of n, turbidity, $\theta$, and pressure transients, $\sigma_p$. These give rise to three cross correlations, $C_{n,\theta}$ $C_{n,\sigma}$ and $C_{\theta,\sigma}$ all of which approach +1 in the case of cavitation. It is noted that the correlation functions are calculated for each pipe, meaning that they enter the hierarchy previously outlined for the $S$ data sets. Hence, the location of the critical event (in this case cavitation) can be estimated by tracing through the hierarchy.

The generation of an alarm in the system is conditioned upon the comparison of the present state of the system with a reference state corresponding to normal operating conditions. A sufficiently large deviation from the reference state on one or more parameters triggers the alarm to the system supervisor. E.g. elevated noise level $n(A131)$ relative to the reference level associated with sufficiently negative value of $C_{v,n}(A131)$ results in the leak alarm for the pipe $A131$. By the state of the system should be understood the values of the $S$ registers and the cross correlations calculated from these.

The reference state could be a pre-programmed set of parameters and all correlation functions zero within $\pm$ 0.1 tolerance. Alternatively, the reference state could be taught to the system by storing the parameter set associated to a state accepted as normal operation. Finally, the system could be configured to generate its own reference state based upon machine learning and some input from the system supervisor.

In the prior art, flow, pressure and temperature sensors will be located at all the hubs shown in Fig. 6 at best, meaning that, in our notation, only $S1$ and perhaps S2 can be calculated and with poor statistics. A system with the number of sensors proposed here, i.e. at a significant amount or all of the consumer sites, will be much more powerful with respect to fault detection and optimization.

Financially, the monitoring system can be implemented with a small additional cost, since the bulk of sensors are integral parts of the consumption meters, where they can be incorporated at a modest additional cost, and the communication infrastructure is already existing with the current AMR platforms. Of course, the analysis to be performed on the vast amount of data produced requires dedicated software, and a hardware platform for the processing. However, this is still possible on existing servers associated in an AMR platform.

Calculating for instance a correlation between two datasets, each containing N parameters, requires on the order of $N^2$ calculations. That is, the number of computation scales exponentially with the number of cross correlations performed. The hierarchal scheme presented above holds the promise of keeping the amount of essential information but reducing the amount of computation by dividing the data into subsets arranged according to the network topology.

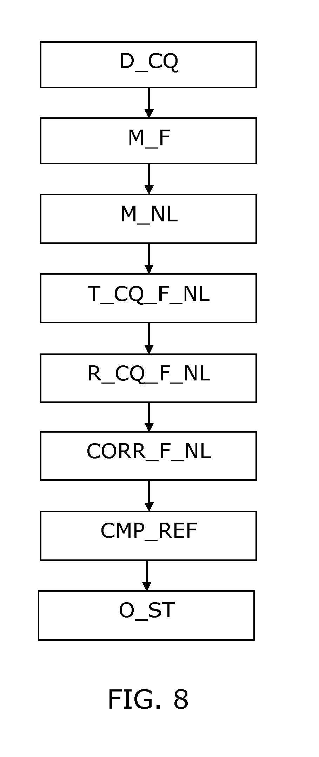

Fig. 8 illustrates a method embodiment, where, at a plurality of consumer sites, a consumption meter is used to determine a consumed quantity D_CQ of a utility. Further, the consumption meter measured a flow rate M_F of the utility. Still further, a noise level of noise in the utility pipe system is measured M_NL by the consumption meter. Data representing the consumed quantity, the flow rate, and the noise level are transmitted T_CQ_F_NL by one single communication module in the consumption meter, e.g. in a radio frequency signal as used for AMR. The same data are received R_CQ_F_NL by a main collector from each of the plurality of consumption meters.

The flow rate and noise level data are then applied to a server which executes a monitor algorithm involving a correlation function CORR_F_NL to exploit correlation between flow rate data and noise level data for each of the consumption meters, e.g. storing times series of one or more values resulting from such correlation function. The resulting value output from the correlation function is then compared CMP_REF with a predetermined reference value, e.g. a baseline value for the correlation function output determined to represent a "normal" value for operation of the utility network. In response to the comparison, an output indicative of a state of the utility network is generated accordingly O_ST, e.g. a leak state in the form of an output on a display to an operator such as "leak detected", in case a leak is likely to be present and thus should be further investigated. E.g. a location may be displayed as well to the operator.

To sum up, the invention provides a system for monitoring a utility network, e.g. to determine an error state such as a pipe leak etc. The system comprises a plurality of consumption meters at respective consumer sites (preferably more than 10% of the consumer sites). Besides determining a consumed quantity of the utility, these meters can measure a first parameter indicative of fluid flow rate, and at least one second parameter indicative of one of: pressure transients, noise level, and turbidity of the fluid. Via their communication modules, the meters can transmit all of: data representing the consumed quantity, the first and second parameters, and an indication of a location of its location in the utility network, e.g. a unique identification number. These data from each of the plurality of consumption meters are received, preferably via an existing communication system for meter reading. A monitor algorithm is used to process the received first and second parameters according to a predetermined analysis algorithm, preferably involving a correlation analysis between flow rate and one or more of the second parameters. This algorithm produces an output which is compared with a reference value, e.g. such as based on a statistically based baseline value measured for the utility network or based on a general database value, and a state of the utility network is then determined and output accordingly.

Although the present invention has been described in connection with the specified embodiments, it should not be construed as being in any way limited to the presented examples. The invention can be implemented by any suitable means; and the scope of the present invention is to be interpreted in the light of the accompanying claim set. Any reference signs in the claims should not be construed as limiting the scope.

**Claims**

1. A system for monitoring a utility network, the system comprising:

   - a plurality of consumption meters arranged at respective consumer sites, and being arranged to determine a consumed quantity of the utility at the consumer site, wherein each of the plurality of consumption meters

      - is arranged to measure a plurality of parameters comprising

         - a first parameter indicative of flow rate of a fluid flowing in the network at the consumer site,
         - at least one second parameter indicative of one of:

            • pressure transients of the fluid at the consumer site,
            • noise level of the fluid at the consumer site, and
            • turbidity of the fluid at the consumer site, and

      - comprises a communication module arranged to transmit first data representing

         • the consumed quantity, and
         second data representing all of:
         • said plurality of parameters, and
         • an indication of a location of the consumption meter in the utility network

   - a main collector arranged to receive all of said first and second data from each of said plurality of consumption meters, and
   - a computer connected to the main collector, so as to receive and process said second data from each of said plurality of consumption meters according to a monitor algorithm, wherein the monitor algorithm is arranged

      - to process said second data from each of said plurality of consumption meters according to a predetermined analysis algorithm,
      - to compare an output value from said analysis algorithm with a predetermined reference value, and
      - to generate an output indicative of a state of the utility network accordingly.

2. System according to claim 1, wherein the analysis algorithm involves determining at least one output value in response to second data from at least one group of the plurality of consumption meters, and to compare said at least one output value with a predetermined reference value for the said group, and to determine a state for said group accordingly.

3. System according to any of the preceding claims, wherein the plurality of consumption meters cover 10% or more of all consumption sites in the utility network.

4. System according to any of the preceding claims, wherein the plurality of parameters comprises at least two of said second parameters.

5. System according to any of the preceding claims, wherein the plurality of parameters comprises at least one third parameter indicative of one of:

   • pressure, of the fluid at the consumer site, and
   • temperature of the fluid at the consumer site.

6. System according to any of the preceding claims, wherein said state is indicative of one of:

   • a fluid leak and its location in the utility network,
   • a contamination and location of its origin in the utility network,
   • a cavitation and its location in the utility network, and
   • a fluid pressure failure.

7. System according to any of the preceding claims, wherein the second parameter of the plurality of parameters is indicative of the noise level of the fluid at the consumer site, and wherein said state is indicative of a leak and its location in the utility network.

8. System according to claim 7, wherein said plurality of parameters further comprises a further second parameter indicative of one of: pressure transients of the fluid at the consumer site, or turbidity of the fluid at the consumer site.

9. System according to any of claims 1-6, wherein the second parameter of the plurality of parameters is indicative of the turbidity of the fluid at the consumer site, and wherein said state is indicative of a contamination and location of its origin in the utility network.

10. System according to any of claims 1-6, wherein the second parameter of the plurality of parameters is indicative of at least one of: noise level of the fluid at the consumer site, pressure transients of the fluid at the consumer site, and turbidity of the fluid at the consumer site, and wherein said state is indicative of a cavitation and its location in the utility network.

11. System according to any of claims 1-6, wherein the second parameters comprises a parameter indicative of pressure transients of the fluid at the consumer site, and wherein said state is indicative of a fluid pressure failure and its location in the utility network.

12. System according to claim 11, wherein said plurality of parameters comprises a further second parameter indicative of noise level of the fluid at the consumer site, or of turbidity of the fluid at the consumer site.

13. System according to any of the preceding claims, wherein said plurality of consumption meters comprises one or more ultrasonic transducers arranged for transmitting and receiving ultrasonic signals in fluid flowing through a measuring tube, and wherein a measurement circuit connected to the one or more ultrasonic transducers is arranged to generate data indicative of flow rate of the fluid flowing through the measuring tube accordingly.

14. System according to claim 13, wherein said one or more ultrasonic transducers and the measurement circuit are further arranged to generate at least one of said second parameters.

15. System according to claim 13 or 14, comprising a dedicated transducer arranged to provide a measurement on fluid flowing through the measuring tube, and a measurement circuit connected to said dedicated transducer arranged to generate data indicative of at least one of said second parameters.

16. System according to any of the preceding claims, wherein the utility network is one of: a water supply network, a district heating network, a district cooling network, and a gas supply network.

17. Method for monitoring a utility network with a plurality of consumption meters arranged at respective consumer sites, and being arranged to determine a consumed quantity of the utility at the consumer site, the method comprising

   - measuring, by each of said plurality of consumption meters, a plurality of parameters comprising

      - a first parameter indicative of flow rate of a fluid flowing in the network at the consumer site,
      - at least one second parameter indicative of one of:

         • pressure transients of the fluid at the consumer site,
         • noise level of the fluid at the consumer site, and
         • turbidity of the fluid at the consumer site,

      - transmitting, by each of said plurality of ultrasonic consumption meters, first data representing

• the consumed quantity, and

second data representing all of:

• said plurality of parameters, and

• an indication of a location of the consumption meter in the utility network,

- receiving, by a main collector, all of said first and second data from each of said plurality of consumption meters,

- processing said second data from each of said plurality of consumption meters according to a predetermined analysis algorithm,

- comparing an output value from said analysis algorithm with a predetermined reference value, and

- generating an output indicative of a state of the utility network accordingly.

FIG. 1

FIG. 2

FIG. 3

FIG. 4

FIG. 5

FIG. 6

*Parameter hierarchy*

```
                                          S1(A1) ------- S1(A2)   S1(A3)
Main pipes
         S2(A11)              S2(A12)                    S2(A13)
Sec.
  S3(A111) S3(A112) S3(A113)  S3(A121) S3(A122) S3(A123)  S3(A131) S3(A132) S3(A133)
Tert.
  y(A111,1) y(A112,1) y(A113,1)  y(A121,1) y(A122,1) y(A123,1)  y(A131,1) y(A132,1) y(A133,1)
  y(A111,2) y(A112,2) y(A113,2)  y(A121,2) y(A122,2) y(A123,2)  y(A131,2) y(A132,2) y(A133,2)
                                                              y(A131,3)
                                                              y(A131,4)
                                                              y(A131,5)
                                                              y(A131,6)
Cons.                                                         y(A131,7)
                                                              y(A131,8)
                                                              y(A131,9)
                                                              y(A131,10)
  y(A111,11) y(A112,11) y(A113,11)  y(A121,11) y(A122,11) y(A123,11)  y(A131,11) y(A132,11) y(A133,11)
  y(A111,12) y(A112,12) y(A11,12)   y(A121,12) y(A122,12) y(A123,12)  y(A131,12) y(A132,12) y(A133,12)
```

FIG. 7

D_CQ

↓

M_F

↓

M_NL

↓

T_CQ_F_NL

↓

R_CQ_F_NL

↓

CORR_F_NL

↓

CMP_REF

↓

O_ST

FIG. 8

Europäisches
Patentamt

European
Patent Office

Office européen
des brevets

# EUROPEAN SEARCH REPORT

Application Number

EP 15 17 5271

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/083340 A1 (IMP INNOVATIONS LTD [GB]) 5 June 2014 (2014-06-05)<br>* page 1, line 1 - line 6; figure 1 *<br>* page 1, line 6 - line 8 *<br>* page 6, line 25 - line 26 *<br>* page 16, line 21 - line 27 *<br>* page 17, line 20 - line 23 *<br>* page 17, line 28 - page 18, line 7 *<br>* page 22, line 8 - line 15 *<br>* page 22, line 22 - line 24 *<br>* page 24, line 4 - line 7 *<br>* page 24, line 29 - line 34 *<br>* page 16, line 21 - page 17, line 5 *<br>* page 17, line 20 - page 18, line 7 *<br>* page 22, line 22 - line 25 *<br>* page 23, line 13 - line 18 *<br>* page 24, line 1 - line 7 *<br>* page 24, line 29 - page 25, line 2 *<br>* figures 1-3,6,7,10 *<br>----- | 1-17 | INV.<br>G01F25/00<br>G01F1/66<br>G01F15/06 |
| X | AU 2014 202 604 A1 (SOUTH EAST WATER CORP) 5 June 2014 (2014-06-05)<br>* page 7, line 17 - page 8, line 26 *<br>* page 10, line 34 - page 11, line 8 *<br>* page 11, line 25 - line 30 *<br>* page 13, line 23 - line 27 *<br>* page 15, line 16 - line 18 *<br>* page 16, line 20 - line 36; figures *<br>----- | 1-17 | **TECHNICAL FIELDS SEARCHED (IPC)**<br>G01F |

The present search report has been drawn up for all claims

| Place of search | Date of completion of the search | Examiner |
|---|---|---|
| The Hague | 22 January 2016 | Keita, Mamadou |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.** EP 15 17 5271

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2016

| Patent document cited in search report | Publication date | Patent family member(s) | Publication date |
|---|---|---|---|
| WO 2014083340 A1 | 05-06-2014 | EP 2926094 A1<br>KR 20150095718 A<br>US 2015308627 A1<br>WO 2014083340 A1 | 07-10-2015<br>21-08-2015<br>29-10-2015<br>05-06-2014 |
| AU 2014202604 A1 | 05-06-2014 | NONE | |

EPO FORM P0459

For more details about this annex : see Official Journal of the European Patent Office, No. 12/82